(19) Europäisches Patentamt
European Patent Office
Office européen des brevets

(11) **EP 3 038 468 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(51) Int Cl.:
***A01N 43/80*** *(2006.01)*     ***A01N 47/44*** *(2006.01)*
***A01P 1/00*** *(2006.01)*     ***A01P 3/00*** *(2006.01)*

(21) Anmeldenummer: **14755373.9**

(22) Anmeldetag: **25.08.2014**

(86) Internationale Anmeldenummer:
**PCT/EP2014/067970**

(87) Internationale Veröffentlichungsnummer:
**WO 2015/028414 (05.03.2015 Gazette 2015/09)**

(54) **MIKROBIZIDE MITTEL**

MICROBICIDAL AGENTS

PRODUITS MICROBIOCIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2013 EP 13182078**

(43) Veröffentlichungstag der Anmeldung:
**06.07.2016 Patentblatt 2016/27**

(73) Patentinhaber: **Lanxess Deutschland GmbH
50569 Köln (DE)**

(72) Erfinder:
• **GERHARZ, Tanja
42699 Solingen (DE)**
• **WACHTLER, Peter
47800 Krefeld (DE)**

(56) Entgegenhaltungen:
**WO-A1-99/08530     US-A- 4 661 503**

EP 3 038 468 B1

**EP 3 038 468 B1**

**Beschreibung**

Gegenstand der vorliegenden Anmeldung sind biozide Mittel enthaltend (i) 1,2-Benzisothiazolin-3-on (BIT) oder (ii) BIT und 2-Methyl-4-isothiazolin-3-on (MIT), sowie zumindest ein N-Alkyl-Guanidiniumsalz der Formel (I), $[H_2N\text{-}(C=NH_2)\text{-}NH\text{-}R]^+X^-$, in der R für n-Dodecyl und X- für ein monovalentes Anion oder 1/p Äquivalente eines p-valenten Anions steht, wobei p für eine natürliche Zahl von 2 oder mehr steht, Verfahren zu deren Herstellung sowie ihre Verwendung zum Schutz von technischen Materialien und Produkten, die von Mikroorganismen befallen werden können.

N-Alkylguanidinsalze verfügen über gute bakterizide Wirksamkeit, gute Wirkgeschwindigkeit und sind sehr gut wasserlöslich. Allerdings kann es beim Einsatz größerer Mengen von N-Alkylguanidiniumsalzen zur Schaumbildung kommen, wodurch der Einsatz erschwert bzw. unmöglich gemacht wird. Weiterhin können in der Praxis zur Erzielung zufriedenstellender Ergebnisse in manchen Fällen sehr hohe Dosiermengen notwendig. Weiterhin kann die hohe Wasserlöslichkeit für Anwendungen im Aussenbereich nachteilig sein, da die Bewitterung schnell zur Auswaschung führt.

Aus US 4,661,503 sind synergistische Mischungen von Dodecylguanidinium-hydrochlorid mit einer Mischung aus 5-Chlor-2-methyl-4-isothiazolin-3-on (CMIT) und MIT in einem Gewichtsverhältnis von etwa 3 zu 1, die gute Wirkung gegen Bakterien und Pilze aufweisen soll. Es ist jedoch wünschenswert solche Mischungen weiter zu verbessern.

BIT und seine Salze wie insbesondere seine Natrium-, Kalium- und Lithiumsalze sind seit langem in der Praxis verwendete Wirkstoffe zur Herstellung mikrobizid wirksamer Formulierungen. BIT zeichnet sich durch eine gute chemische und thermische Stabilität aus und verfügt grundsätzlich über eine breite antimikrobielle Wirkung (Bakterien, Pilze, Hefen). Allerdings ist die Wirksamkeit gegen bestimmte Bakterienarten nicht immer zufriedenstellend und die beobachtete Wirkgeschwindigkeit häufig zur Vermeidung mikrobiologisch induzierter Materialschäden nicht ausreichend.

Zur Verbesserung der Wirksamkeit und Effizienz von BIT ist zum Beispiel aus EP 1 005 271 A1 bekannt, MIT und gegebenenfalls weitere Biozide wie zum Beispiel Formaldehyd oder Formaldehyd freisetzende Substanzen zuzugeben.

Aber auch für solche Mischungen ist eine Verbesserung des Wirkungsspektrums, der Wirkgeschwindigkeit oder der insgesamt einzusetzenden Menge an Bioziden wünschenswert.

Es wurden nun biozide Mittel gefunden die enthalten

(a)

(i) 1,2- Benzisothiazolin-3-on,
oder

(ii) 1,2-Benzisothiazolin-3-on und 2-Methyl-4-isothiazolin-3-on,

und
(b) zumindest ein N-Alkyl-Guanidiniumsalz der Formel (I),

$$[H_2N\text{-}(C=NH_2)\text{-}NH\text{-}R]^+X^- \qquad (I)$$

in der R für n-Dodecyl und X- für ein monovalentes Anion oder 1/p Äquivalente eines p-valenten Anions steht, wobei p für eine natürliche Zahl von 2 oder mehr steht.

Der Rahmen der Erfindung umfasst neben den genannten Bereichen und Vorzugsbereichen von Formeln und Parametern auch beliebige Kombinationen davon, selbst wenn sie aus praktischen Gründen nachstehend nicht vollständig explizit aufgeführt sind.

Die erfindungsgemäßen Mischungen weisen eine starke Wirkung gegen Mikroorganismen wie Bakterien, Pilze, Hefen und Algen auf und können zum Schutz von technischen Materialien gegen Befall und Zerstörung durch Mikroorganismen eingesetzt werden.

Unter N-Alkyl-Guanidiniumsalzen werden erfindungsgemäß Verbindungen verstanden, die zumindest eine Guanidiniumgruppe oder Biguanidgruppe aufweisen, die an zumindest einem ihrer Stickstoff-Atome einen Alkyl-Rest aufweisen oder Verbindungen, in denen jeweils zwei Gruppen ausgewählt aus Guanidiniumgruppen und Biguanidgruppen über zumindest jeweils eines ihrer Stickstoffatome über einen Alkylenrest verknüpft sind. Beispiele für Verbindungen der letzteren Art umfassen Chlorhexidin und Polyhexanid.

Erfindungsgemäße N-Alkyl-Guanidiniumsalze sind solche der Formel (I)

$$[H_2N\text{-}(C=NH_2)\text{-}NH\text{-}R]^+X^- \qquad (I)$$

in der R für n-Dodecyl steht und X- für ein monovalentes Anion oder 1/p Äquivalente eines p-valenten Anions steht, wobei p für eine natürliche Zahl von 2 oder mehr steht.

R steht für n-Dodecyl.

X⁻ steht bevorzugt für Formiat, Acetat, Nitrat, Halogenid wie beispielsweise Chlorid oder Bromid

Besonders bevorzugte Verbindungen der Formel (I) sind n-Dodecylguanidiniumacetat und n-Dodecylguanidiniumchlorid.

Bevorzugte biozide Mittel enthalten als Komponente (a) 1,2-Benzisothiazolin-3-on und 2-Methyl-4-isothiazolin-3-on.

Die relativen Verhältnisse der Komponenten (a) und (b) können in den erfindungsgemäßen Mischungen über einen weiten Bereich variiert werden.

Beispielsweise beträgt das Gewichtserhältnis der Komponenten (a) und (b) zueinander beispielsweise 10:1 bis 1:10 vorzugsweise 5:1 bis 1:5 und besonders bevorzugt 2:1 bis 1:5.

Sofern BIT und MIT als Komponente (a) eingesetzt werden beträgt deren Gewichtsverhältnis beispielsweise 1:100 bis 100:1, vorzugsweise 3:1 bis 1:3 und besonders bevorzugt 1,5:1 bis 1:2,5.

Die erfindungsgemäßen Mittel eignen sich hervorragend als Konservierungsmittel für technische Materialien. Der Begriff "Technische Materialien" umfasst im Allgemeinen, jedoch ohne Limitierung darauf, folgende Materialien und Produkte:

- Anstrichmittel, Farben, Putze und sonstige Beschichtungsmittel

- Stärkelösungen und -slurrys oder andere auf Basis von Stärke hergestellte Produkte wie z.B. Druckverdicker

- Slurrys anderer Rohstoffe wie Farbpigmente (z.B. Eisenoxidpigmente, Rußpigmente, Titandioxidpigmente) oder Slurrys von anorganischen Füllstoffen und Pigmenten wie Kaolin, Calciumcarbonat, Gips, Bentonit, Magnesium Silikate, Smectid oder Talkum.

- Bauchemische Produkte wie Betonadditive beispielsweise auf Basis von Melasse, Ligninsulfonat oder Polyacrylaten, Bituimenemulsionen oder Fugendichtungsmassen

- Leime oder Klebstoffe auf Basis der bekannten tierischen, pflanzlichen oder synthetischen Rohstoffe

- Polymerdispersionen auf Basis von z.B. Polyacrylat, Polystyrolacrylat, Styrolbutadien, Polyvinylacetat u.a.

- Detergentien und Reinigungsmittel für den technischen und Haushaltsbedarf

- Mineralöle und Mineralölprodukte (wie z.B. Dieselkraftstoffe)

- Kühlschmierstoffe zur Metallverarbeitung auf Basis von Mineralöl-haltigen, halbsynthetischen oder synthetischen Konzentraten

- Hilfsmittel für die Leder-, Textil- oder photochemische Industrie

- Vor- und Zwischenprodukte der chemischen Industrie, z.B. bei der Farbstoffproduktion und -lagerung

- Tinten oder Tuschen

- Wachs und Tonemulsionen

Bevorzugt handelt es sich bei den technischen Materialien um:

- Stärke-lösungen und -slurrys oder andere auf Basis von Stärke hergestellte Produkte wie z.B. Druckverdicker

- Slurrys anderer Rohstoffe wie Farbpigmente (z.B. Eisenoxidpigmente, Rußpigmente, Titandioxidpigmente) oder Slurrys von anorganischen Füllstoffen und Pigmenten wie Kaolin, Calciumcarbonat, Gips, Bentonit, Magnesium Silikate, Smectid oder Talkum.

Besonders bevorzugt handelt es sich bei den technischen Materialien um:

- Slurrys von anorganischen Füllstoffen und Pigmenten wie Kaolin, Calciumcarbonat, Gips, Bentonit, Magnesium Silikate, Smectid oder Talkum, wobei Slurries von Calciumcarbonat noch weiter bevorzugt sind.

Die erfindungsgemäßen Mittel können besonders effizient in einem Verfahren zum Schutz technischer Materialien vor Befall mit und/oder Zerstörung durch Mikroorganismen eingesetzt werden. Sie sind insbesondere wirksam gegen Bakterien, Pilze und Schleimorganismen. Beispielhaft seien die folgenden Mikroorganismen genannt:

Bakterien:

Alcaligenes wie Alcaligenes faecalis, Bacillus wie Bacillus subtilis, Citrobacter wie Citrobacter freundii, Corynebacterium wie Corynebacterium ammoniagenes, Enterobacter wie Enterobacter aerogenes, Enterococcus wie Enterococcus hirae, Escherichia wie Escherichia coli, Proteus wie Proteus hauseri, Pseudomonas wie Pseudomonas aeruginosa, Pseudomonas fluorescens oder Pseudomonas stutzeri, Salmonella wie Salmonella enterica, Staphylococcus wie Staphylococcus aureus;

Pilze:

Acremonium wie Acremonium strictum, Alternaria wie Alternaria tenuis oder Alternaria alternata, Aspergillus wie Aspergillus niger oder Aspergillus brasiliensis, Candida wie Candida albicans, Chaetomium wie Chaetomium globosum, Fusarium wie Fusarium solani, Geotrichum wie Geotrichum candidum, Lentinus wie Lentinus tigrinus, Penicillium wie Penicillium glaucum oder Penicillium pinophilum, Rhodotorula wie Rhodotorula rubra oder Rhodotorula mucilaginosa, Stachybotrys wie Stachybotrys chartarum, Trichoderma wie Trichoderma virens.

Die erfindungsgemäßen Mischungen können als Komponente c) zusätzlich entweder keinen, einen oder mehrere weitere biozide Wirkstoffe enthalten. Beispielsweise können diese weiteren bioziden Wirkstoffen ausgewählt sein aus der Gruppe bestehend aus Bronopol, Benzylhemiformal, Trimethylen-2-methylisothiazolinon-3-on, N-Methyl-benzisothiazolinon, 2-n-Octylisothiazolin-3-on, Tetramethylolacetylendiharnstoff (TMAD), 1,3-Bis(hydroxymethyl)-5,5-dimethylimidazolidine-2,4-dion (DMDMH), p-Chlor-m-kresol, Dimethylolharnstoff, 1,2-Dibrom-2,4-dicyanobutan, 2,2-Dibrom-3-nitrilopropionsäureamid, Glutardialdehyd, Ethylenglykolhemiformal, Ethylenglykol-bis-hemiformal, N-Methylol-harnstoff, Thiabendazol, Carbendazim, Zink-Pyrithion, Natrium-Pyrithion, 2-Phenoxyethanol, Phenoxypropanol, o-Phenylphenol, Chlorophen und quartären Ammoniumsalzen, wie z. B. N-Alkyl-N,N-dimethyl-benzyl-ammoniumchlorid sowie mit den eingangs genannten Einschränkungen CMIT.

Die Anwendungskonzentrationen der erfindungsgemäßen Mittel und das Verhältnis der Komponenten (a) und (b) und den gegebenenfalls enthaltenen, weiteren Wirkstoffen richtet sich nach der Art und dem Vorkommen der zu bekämpfenden Mikroorganismen, der mikrobiellen Ausgangsbelastung, sowie nach der Zusammensetzung des zu schützenden Materials. Die optimale Einsatzmenge für eine bestimmte Anwendung kann vor dem Praxiseinsatz durch Testreihen im Labor in einer dem Fachmann hinlänglich bekannten Weise einfach ermittelt werden.

Weiterhin sind von der Erfindung auch die mit den erfindungsgemäßen Mittel behandelten technischen Materialien umfasst.

Im Allgemeinen sind in Summe 2 bis 50,000 ppm der Komponenten (a) und (b), bevorzugt 5 bis 5,000 ppm, besonders bevorzugt 10 bis 2,000 ppm und besonders bevorzugt 200 bis 1,000 ppm im technischen Material zur Konservierung enthalten. Von der Erfindung sind daher auch technische Materialien umfasst, die mit erfindungsgemäßem Mittel behandelt wurden, bzw in einer anderen Ausführungsform die vorgenannten Mengen der Komponenten (a) und (b) enthalten.

In den erfindungsgemäßen Mitteln kann die Summe aus den Komponenten (a) und (b) in einem breiten Bereich variiert werden. Im allgemeinen beträgt die Summe der Komponenten (a) und (b) 1 bis 80 Gew.%, bevorzugt 2 bis 70 Gew.% und besonders bevorzugt 4 bis 50 Gew.% bezogen auf das Gesamtgewicht den erfindungsgemäßen Mittel.

Der Anteil an gegebenenfalls in den erfindungsgemäßen Mitteln eingesetzten, weiteren Wirkstoffen als Komponente (c) kann in einem weiten Bereich variieren und hängt stark von der Natur des Wirkstoffes und dem zu schützenden Medium ab. Im Allgemeinen kann er zwischen 0,2 und 20 Gew-%, bevorzugt zwischen 0,5 und 10 Gew-% und besonders bevorzugt zwischen 0,5 und 5 Gew-% bezogen auf das Gesamtgewicht der Konzentrate oder Formulierungen liegen.

In weiteren Aspekten umfasst die Erfindung die jeweils unabhängige Verwendung von MIT oder BIT oder N-Alkylguanidiniumsalze zur Herstellung der erfindungsgemäßen Mittel oder technischen Materialien.

Die Anwendung der erfindungsgemäßen Mittel kann, in Abhängigkeit von ihren jeweiligen physikalischen und/oder chemischen Eigenschaften, entweder separat in Form einer Zudosierung der Einzelwirkstoffe zum zu schützenden technischen Material erfolgen, wobei je nach den Erfordernissen des zu lösenden Konservierungsproblems eine individuelle Einstellung des Konzentrationsverhältnisses vorgenommen werden kann, oder es kann die Zudosierung eines fertigen bioziden Mittels enthaltend die Komponenten (a) und (b) erfolgen.

Die Formulierung der erfindungsgemäßen Mittel ist beliebig und kann beispielsweise in Form von Lösungen, Emulsionen, Suspensionen, Pulvern, Schäumen, Pasten, Granulaten, Aerosolen und Mikroverkapselungen in polymeren Stoffen erfolgen.

Die erfindungsgemäßen Mittel können daher jeweils weiterhin enthalten oder auch nicht:

- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat.

- Benetzungsmittel, wie beispielsweise Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether-und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose.

- Emulgatoren, wie beispielsweise Natrium-, Kalium- und Ammoniumsalze von gradkettigen aliphatischen Carbonsäuren der Kettenlänge $C_{12}$-$C_{20}$, Natriumhydroxyoctadecansulfonat, Natrium-, Kalium- und Ammoniumsalze von Hydroxyfettsäuren der Kettenlänge $C_{12}$-$C_{20}$ und deren Sulfierungs-bzw. Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate, Dimethyldialkyl($C_8$-$C_{18}$)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylenglykolethern von einwertigen aliphatischen Alkoholen der Kettenlänge $C_{10}$-$C_{12}$ (Di-Natriumsalz), Sulfobernsteinsäure-4-Ester mit Polyethylenglykolnonylphenylether (Di-Natriumsalz), Sulfobernsteinsäure biscyclohexylester (Natriumsalz), Ligninsulfonsäure sowie deren Calcium-, Magnesium-, Natrium-und Ammoniumsalze, Polyoxyethylen-sorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol.

- Dispergiermittel, wie beispielsweise Alkylphenolpolyglycolether.

- Stabilisatoren, wie z.B. Cellulose und Cellulosederivate.

- Haftmittel und Verdicker, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie mineralische oder pflanzliche Öle.

- Spreitmittel, wie beispielsweise Isopropylmyristat, Polyoxyethylennonylphenylether und Polyoxyethylenlaurylphenylether.

- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon.

- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink.

- Entstaubungsmittel, wie beispielsweise Polyglykole und Polyglykolether. Die zumindest im Wesentlichen festen Formulierungen können dabei beispielsweise jeweils 0,01 bis 2, vorzugsweise 0,05 bis 1, besonders bevorzugt 0,1 bis 0,5 Gew.- % an Entstaubungsmitteln enthalten.

- Puffersubstanzen, Puffersysteme oder pH-Wert-Regulatoren. Die zumindest im Wesentlichen festen Formulierungen können dabei beispielsweise jeweils 0,01 bis 10, vorzugsweise 0,1 bis 5, Gew.-% an Puffersubstanzen, Puffersystemen oder pH-Wert-Regulatoren enthalten.

- Feste Trägerstoffe wie beispielsweise natürliche Gesteinsmehle, wie Kaoline, Tonerden, Talkum, Kreide, Quarz, Attapulgit, Montmorillonit oder Diatomeenerde sowie synthetische Gesteinsmehle, wie hochdisperse Kieselsäure, Aluminiumoxid und Silikate;
Als feste Trägerstoffe insbesondere für Granulate sind beispielsweise geeignet: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengen;

- Wasser

Der besondere Vorteil der Erfindung liegt in der Bereitstellung ungewöhnlich stark wirksamer, überwiegendst synergistischer biozider Mittel mit einem breiten Wirkungssprektrum und hoher Wirkgeschwindigkeit, die gegenüber Kombinationen von BIT und MIT allein deutlich erhöht sind.

## Beispiele

Das Wachstum von Bakterien und Pilzen bei der Zugabe verschiedener biozider Mischungen wurde überprüft. Die Konzentration, ab der kein Wachstum mehr detektiert wird, wird als minimale Hemmkonzentration (MHK) angegeben. Die Vorkultivierung der Bakterien, die in den Test eingesetzt wurden, erfolgte auf Trypton-Soja-Agar. Die Vorkultivierung der Pilze, die in den Test eingesetzt wurden, erfolgte auf Malzextrakt-Agar. Die Überprüfung des Wachstums in den MHK-Tests erfolgte in Trypton-Soja-Bouillion (Bakterien) bzw. Malzextrakt-Bouillion (Pilze). Die Organismen wurden bei 26 °C und einer relativen Luftfeuchte von 70 bis 80 % inkubiert. Die Bakterien wurden nach 4 Tage, die Pilze nach 7 Tage ausgewertet.
Der synergistische Index (SI) wurde nach der von Kull et al. (F.C. Kull et al., Applied Microbiology 9 (1961), 538 - 541) beschriebenen Methode bestimmt.
Dabei gilt folgende Beziehung: SI = QA/ Qa + QB/ Qb

$$Qa \times \frac{MHK(A+B)}{MHK(A)} \oplus Qb \times \frac{MHK(A+B)}{MHK(B)} = SI$$

$Q_a$ = Anteil von Substanz A
$Q_b$ = Anteil von Substanz B
MHK(A) = Konzentration von Substanz A, die das Keimwachstum unterbindet
MHK(B) = Konzentration von Substanz B, die das Keimwachstum unterbindet
MHK(A+B) = Konzentration von A+B, die das Keimwachstum unterbindet

Wenn SI einen Wert von über 1 aufweist, bedeutet dies, dass ein Antagonismus vorliegt.
Wenn SI den Wert 1 annimmt, bedeutet dies, dass eine Addition der Wirkung gegeben ist.
Wenn SI von unter 1 annimmt, bedeutet dies, dass ein Synergismus besteht.

## Beispiel 1

Die Wirkung einer Wirkstoffkombination von BIT und MIT im Gewichtsverhältnis von 1:1 und variierenden Mengen an Dodecylguanidin Hydrochlorid (DGH, Angaben beziehen sich ebenfalls auf Gewichtsverhältnisse) wurde getestet.
Angegeben sind in

Tabelle 1: Die MHK-Werte für verschiedene Bakterien
Tabelle 2: Die Synergieindices berechnet für die Ergebnisse gemäß Tabelle 1
Tabelle 3: Die MHK-Werte für verschiedene Pilze
Tabelle 4: Die Synergieindices berechnet für die Ergebnisse gemäß Tabelle 3

Tabelle 1:

| Stamm | BIT:MIT (1:1) | 1 : 1 | 2 : 3 | 1 : 4 | 1 : 9 | DGH |
|---|---|---|---|---|---|---|
| *Bacillus subtilis* | 10 | 5 | 5 | 2.5 | 5 | 5 |
| *Citrobacter freundii* | 25 | 10 | 10 | 5 | 10 | 10 |
| *Corynebacterium ammoniagenes* | 62.5 | 5 | 5 | 2.5 | 5 | 5 |
| *Enterococcus hirae* | 25 | 5 | 5 | 1.75 | 5 | 5 |
| *Pseudomonas aeruginosa* | 25 | 25 | 25 | 25 | 25 | 50 |
| *Staphylococcus aureus* | 25 | 2.5 | 1 | 1 | 2.5 | 2.5 |

Tabelle 2:

| Stamm | 1 : 1 | 2 : 3 | 1 : 4 | 1 : 9 |
|---|---|---|---|---|
| *Bacillus subtilis* | 0.75 | 0.80 | 0.45 | 0.95 |
| *Citrobacter freundii* | 0.70 | 0.76 | 0.44 | 0.94 |
| *Corynebacterium ammoniagenes* | 0.54 | 0.63 | 0.41 | 0.91 |
| *Enterococcus hirae* | 0.60 | 0.68 | 0.29 | 0.92 |
| *Pseudomonas aeruginosa* | 0.75 | 0.70 | 0.60 | 0.55 |
| *Staphylococcus aureus* | 0.55 | 0.26 | 0.33 | 0.91 |

Tabelle 3:

| Stamm | BIT:MIT (1:1) | 9 : 1 | 4 : 1 | 1 : 1 | 2 : 3 | 1 : 4 | 1 : 9 | DGH |
|---|---|---|---|---|---|---|---|---|
| *Acremonium strictum* | 25 | 10 | 7.5 | 2.5 | 1 | 1 | 2.5 | 5 |
| *Alternaria alternata* | 25 | 10 | 7.5 | 7.5 | 2.5 | 2.5 | 5 | 5 |
| *Candida albicans* | 50 | 25 | 25 | 25 | 25 | 10 | 25 | 25 |
| *Fusarium solani* | 62.5 | 37.5 | 37.5 | 37.5 | 25 | 37.5 | 37.5 | 50 |
| *Geotrichum candidum* | 50 | 37.5 | 25 | 25 | 25 | 10 | 25 | 25 |
| *Penicillium pinophilum* | 175 | 50 | 50 | 17.5 | 10 | 10 | 17.5 | 17.5 |
| *Rhodotorula mucilaginosa* | 50 | 25 | 25 | 25 | 25 | 10 | 25 | 25 |
| *Stachybotrys chartarum* | 50 | 50 | 25 | 25 | 25 | 10 | 25 | 25 |
| *Trichoderma virens* | 175 | 25 | 37.5 | 25 | 25 | 25 | 10 | 37.5 |

Tabelle 4:

| Stamm | 9 : 1 | 4 : 1 | 1 : 1 | 2 : 3 | 1 : 4 | 1 : 9 |
|---|---|---|---|---|---|---|
| *Acremonium strictum* | 0.56 | 0.54 | 0.30 | 0.14 | 0.17 | 0.46 |
| *Alternaria alternata* | 0.56 | 0.54 | 0.90 | 0.34 | 0.42 | 0.92 |
| *Candida albicans* | 0.55 | 0.60 | 0.75 | 0.80 | 0.36 | 0.95 |

(fortgesetzt)

| Stamm | 9 : 1 | 4 : 1 | 1 : 1 | 2 : 3 | 1 : 4 | 1 : 9 |
|---|---|---|---|---|---|---|
| *Fusarium solani* | 0.62 | 0.63 | 0.68 | 0.46 | 0.72 | 0.74 |
| *Geotrichum candidum* | 0.83 | 0.60 | 0.75 | 0.80 | 0.36 | 0.95 |
| *Penicillium pinophilum* | 0.54 | 0.80 | 0.55 | 0.37 | 0.47 | 0.91 |
| *Rhodotorula mucilaginosa* | 0.55 | 0.60 | 0.75 | 0.80 | 0.36 | 0.95 |
| *Stachybotrys chartarum* | 1.10 | 0.60 | 0.75 | 0.80 | 0.36 | 0.95 |
| *Trichoderma virens* | 0.20 | 0.37 | 0.40 | 0.46 | 0.56 | 0.92 |

**Beispiel 2**

Die Wirkung einer Wirkstoffkombination von BIT und MIT im Gewichtsverhältnis von 1:2 und variierenden Mengen an Dodecylguanidin Hydrochlorid (DGH, Angaben beziehen sich ebenfalls auf Gewichtsverhältnisse) wurde getestet.
Angegeben sind in

Tabelle 5: Die MHK-Werte für verschiedene Bakterien
Tabelle 6: Die Synergieindices berechnet für die Ergebnisse gemäß Tabelle 5
Tabelle 7: Die MHK-Werte und Synergieindices für verschiedene Bakterien
Tabelle 8: Die MHK-Werte für verschiedene Pilze
Tabelle 9: Die Synergieindices berechnet für die Ergebnisse gemäß Tabelle 8
Tabelle 10: Die MHK-Werte und Synergieindices für verschiedene Pilze

Tabelle 5:

| Stamm | BIT:MIT (1:2) | 3 : 2 | 1 : 1 | 1 : 4 | 1 : 9 | DGH |
|---|---|---|---|---|---|---|
| *Corynebacterium ammoniagenes* | 25 | 5 | 5 | 5 | 2.5 | 5 |
| *Enterobacter aerogenes* | 37.5 | 10 | 10 | 10 | 10 | 10 |
| *Enterococcus hirae* | 25 | 5 | 5 | 5 | 3.75 | 5 |
| *Proteus hauseri* | 10 | 5 | 5 | 10 | 10 | 10 |

Tabelle 6

| Stamm | 3 : 2 | 1 : 1 | 1 : 4 | 1 : 9 |
|---|---|---|---|---|
| *Corynebacterium ammoniagenes* | 0.52 | 0.60 | 0.84 | 0.46 |
| *Enterobacter aerogenes* | 0.56 | 0.63 | 0.85 | 0.93 |
| *Enterococcus hirae* | 0.52 | 0.60 | 0.84 | 0.69 |
| *Proteus hauseri* | 0.50 | 0.50 | 1.00 | 1.00 |

Tabelle 7

| Stamm | MHK [ppm] | | | SI |
|---|---|---|---|---|
| | BIT / MIT (1 : 2) | (BIT / MIT (1 : 2)) : DGH (4 : 1) | DGH | |
| *Alcaligenes faecalis* | 5 | 5 | 10 | 0.90 |
| *Bacillus subtilis* | 10 | 5 | 2.5 | 0.80 |
| *Citrobacter freundii* | 17.5 | 10 | 5 | 0.86 |

(fortgesetzt)

| Stamm | MHK [ppm] | | | SI |
|---|---|---|---|---|
| | BIT / MIT (1 : 2) | (BIT / MIT (1 : 2)) : DGH (4 : 1) | DGH | |
| *Staphylococcus aureus* | 25 | 2.5 | 1 | 0.58 |

Tabelle 8

| Stamm | BIT:MIT (1:2) | 9 : 1 | 4 : 1 | 3 : 2 | 1 : 1 | 2 : 3 | 1 : 4 | DGH |
|---|---|---|---|---|---|---|---|---|
| *Acremonium strictum* | 25 | 10 | 5 | 2.5 | 2.5 | 2.5 | 2.5 | 2.5 |
| *Alternaria alternata* | 37.5 | 10 | 5 | 5 | 5 | 5 | 5 | 5 |
| *Aspergillus brasiliensis* | 250 | 75 | 75 | 82.5 | 25 | 50 | 37.5 | 37.5 |
| *Aureobasidium pullulans* | 25 | 17.5 | 10 | 5 | 5 | 5 | 5 | 5 |
| *Candida albicans* | 50 | 25 | 25 | 25 | 25 | 25 | 25 | 25 |
| *Chaetomium globosum* | 250 | 75 | 50 | 50 | 50 | * | 25 | 25 |
| *Fusarium solani* | 50 | 25 | 25 | 17.5 | 10 | 25 | 25 | 25 |
| *Rhodotorula mucilaginosa* | 50 | 25 | 25 | 10 | 10 | 10 | 25 | 25 |
| *Trichoderma virens* | 250 | 50 | 50 | 50 | 25 | 25 | 25 | 25 |
| * nicht bestimmt | | | | | | | | |

Tabelle 9

| Stamm | 9 : 1 | 4 : 1 | 3 : 2 | 1 : 1 | 2 : 3 | 1 : 4 |
|---|---|---|---|---|---|---|
| *Acremonium strictum* | 0.76 | 0.56 | 0.46 | 0.55 | 0.64 | 0.82 |
| *Alternaria alternata* | 0.44 | 0.31 | 0.48 | 0.57 | 0.65 | 0.83 |
| *Aspergillus brasiliensis* | 0.47 | 0.64 | 1.08 | 0.38 | 0.88 | 0.83 |
| *Aureobasidium pullulans* | 0.98 | 0.72 | 0.52 | 0.60 | 0.68 | 0.84 |
| *Candida albicans* | 0.55 | 0.60 | 0.70 | 0.75 | 0.80 | 0.90 |
| *Chaetomium globosum* | 0.57 | 0.56 | 0.92 | 1.10 | * | 0.82 |
| *Fusarium solani* | 0.55 | 0.60 | 0.49 | 0.30 | 0.80 | 0.90 |
| *Rhodotorula mucilaginosa* | 0.55 | 0.60 | 0.28 | 0.30 | 0.32 | 0.90 |
| *Trichoderma virens* | 0.38 | 0.56 | 0.92 | 0.55 | 0.64 | 0.82 |
| * nicht bestimmt | | | | | | |

Tabelle 10

| Stamm | MHK [ppm] | | | SI |
|---|---|---|---|---|
| | BIT / MIT (1 : 2) | DHG | (BIT / MIT (1 : 2)) : DGH (1 : 1) | |
| *Stachybotrys chartarum* | 50 | 7.5 | 10 | 0.77 |
| *Paecilomyces formosus* | 10 | 5 | 7.5 | 0.79 |
| *Geotrichum candidum* | 50 | 10 | 10 | 0.60 |
| *Penicillium pinophilum* | 75 | 7.5 | 10 | 0.73 |

Die obigen Tabellen 1-10 zeigen deutlich, dass für erfindungsgemäße Dreiermischungen aus BIT, MIT und DGH in verschiedenen Mischungsverhältnissen ein ausgeprägter Synergismus gegen verschiedene Bakterien und Pilze vorhanden ist.

**Beispiel 3**

Die Wirkung einer Wirkstoffkombination von BIT und Dodecylguanidin Hydrochlorid (DGH, Angaben beziehen sich ebenfalls auf Gewichtsverhältnisse) in verschiedenen Gewichtsverhältnissen wurde getestet.

Angegeben sind in

Tabelle 11: Die MHK-Werte und Synergieindices für verschiedene Pilze bei einem Gewichtsverhältnis BIT zu DGH von 3:2

Tabelle 12: Die MHK-Werte und Synergieindices für verschiedene Bakterien

Tabelle 13: Die Synergieindices berechnet für die Ergebnisse gemäß Tabelle 12

Tabelle 14: Die MHK-Werte und Synergieindices für *Staphylococcus aureus* bei verschiedenen Gewichtsverhältnissen BIT zu DGH

Tabelle 15: Die MHK-Werte und Synergieindices für verschiedene Pilze

Tabelle 16: Die Synergieindices berechnet für die Ergebnisse gemäß Tabelle 15

Tabelle 17: Die MHK-Werte und Synergieindices für *Candida albicans* bei verschiedenen Gewichtsverhältnissen BIT zu DGH

Tabelle 11

| Stamm | MHK [ppm] | | | SI |
|---|---|---|---|---|
| | BIT | BIT : DGH (3 : 2) | DGH | |
| *Alcaligenes faecalis* | 2.5 | 2.5 | 10 | 0.70 |
| *Bacillus subtilis* | 5 | 2.5 | 3.75 | 0.56 |
| *Citrobacter freundii* | 10 | 5 | 5 | 0.70 |
| *Corynebacterium ammoniagenes* | 37.5 | 2.5 | 2.5 | 0.44 |
| *Enterobacter aerogenes* | 25 | 10 | 10 | 0.64 |
| *Enterococcus hirae* | 10 | 2.5 | 2.5 | 0.55 |
| *Proteus hauseri* | 7.5 | 5 | 10 | 0.60 |
| *Pseudomonas aeruginosa* | 50 | 25 | 25 | 0.70 |
| *Pseudomonas stutzeri* | 10 | 5 | 5 | 0.70 |
| *Salmonella enterica* | 10 | 5 | 10 | 0.50 |

Tabelle 12

| Stamm | BIT | 1 : 1 | 1 : 4 | 1 : 9 | DGH |
|---|---|---|---|---|---|
| *Bacillus subtilis* | 5 | 3.75 | 2.5 | 2.5 | 3.75 |
| *Enterobacter aerogenes* | 25 | 10 | 10 | 10 | 10 |
| *Proteus hauseri* | 7.5 | 7.5 | 5 | 7.5 | 10 |
| *Pseudomonas aeruginosa* | 50 | 25 | 25 | 25 | 25 |

Tabelle 13

| Stamm | 1 : 1 | 1 : 4 | 1 : 9 |
|---|---|---|---|
| *Bacillus subtilis* | 0.88 | 0.63 | 0.64 |

(fortgesetzt)

| Stamm | 1 : 1 | 1 : 4 | 1 : 9 |
|---|---|---|---|
| *Enterobacter aerogenes* | 0.70 | 0.88 | 0.94 |
| *Proteus hauseri* | 0.88 | 0.53 | 0.78 |
| *Pseudomonas aeruginosa* | 0.75 | 0.90 | 0.95 |

Tabelle 14

| Wirkstoff | Mischungsverhältnis | MHK [ppm] | SI |
|---|---|---|---|
| BIT | | 5 | |
| BIT : DGH | 3 : 2 | 1 | 0.52 |
| BIT : DGH | 1 : 1 | 1 | 0.60 |
| BIT : DGH | 2 : 3 | 0.1 | 0.07 |
| DGH | | 1 | |

Tabelle 15

| | BIT | 9 : 1 | 4 : 1 | 3 : 2 | 1 : 1 | 2 : 3 | 1 : 4 | 1 : 9 | DGH |
|---|---|---|---|---|---|---|---|---|---|
| *Acremonium strictum* | 17.5 | 7.5 | 10 | 1.75 | 3.75 | 5 | 5 | 5 | 7.5 |
| *Aureobasidium pullulans* | 25 | 10 | 10 | 5 | 5 | 5 | 7.5 | 7.5 | 10 |
| *Chaetomium globosum* | 100 | 75 | 37.5 | 17.5 | 37.5 | 37.5 | 25 | 25 | 37.5 |
| *Fusarium solani* | 37.5 | 37.5 | 10 | 5 | 10 | 10 | 17.5 | 10 | 25 |
| *Geotrichum candidum* | 25 | 10 | 10 | 5 | 10 | 10 | 10 | 10 | 10 |
| *Penicillium pinophilum* | 37.5 | 17.5 | 10 | 5 | 5 | 7.5 | 5 | 5 | 5 |
| *Rhodotorula mucilaginosa* | 25 | 25 | 10 | 5 | 10 | 10 | 10 | 10 | 25 |
| *Trichoderma virens* | 87.5 | 37.5 | 25 | 17.5 | 25 | 25 | 37.5 | 25 | 37.5 |

Tabelle 16:

| | 9 : 1 | 4 : 1 | 3 : 2 | 1 : 1 | 2 : 3 | 1 : 4 | 1 : 9 |
|---|---|---|---|---|---|---|---|
| *Acremonium strictum* | 0.49 | 0.72 | 0.16 | 0.36 | 0.51 | 0.59 | 0.63 |
| *Aureobasidium pullulans* | 0.46 | 0.52 | 0.32 | 0.35 | 0.38 | 0.66 | 0.71 |
| *Chaetomium globosum* | 0.88 | 0.50 | 0.29 | 0.69 | 0.75 | 0.58 | 0.63 |
| *Fusarium solani* | 1.05 | 0.29 | 0.16 | 0.33 | 0.35 | 0.65 | 0.39 |
| *Geotrichum candidum* | 0.46 | 0.52 | 0.32 | 0.70 | 0.76 | 0.88 | 0.94 |
| *Penicillium pinophilum* | 0.77 | 0.61 | 0.48 | 0.57 | 0.98 | 0.83 | 0.91 |
| *Rhodotorula mucilaginosa* | 1.00 | 0.40 | 0.20 | 0.40 | 0.40 | 0.40 | 0.40 |
| *Trichoderma virens* | 0.49 | 0.36 | 0.31 | 0.48 | 0.51 | 0.89 | 0.63 |

Tabelle 17:

|  | BIT | 9 : 1 | 4 : 1 | 3:2 | 1 : 1 | 2 : 3 | DGH |
|---|---|---|---|---|---|---|---|
| MHK [ppm] | 25 | 10 | 10 | 5 | 10 | 10 | 25 |
| SI |  | 0.40 | 0.40 | 0.20 | 0.40 | 0.40 |  |

Die obigen Tabellen 11-17 zeigen deutlich, dass für erfindungsgemäße Zweiermischungen aus BIT und DGH in verschiedenen Mischungsverhältnissen ein ausgeprägter Synergismus gegen verschiedene Bakterien und Pilze vorhanden ist.

**Beispiel 4 (nicht erfindungsgemäß)**

Die Wirkung einer Wirkstoffkombination von MIT und Dodecylguanidin Hydrochlorid (DGH, Angaben beziehen sich ebenfalls auf Gewichtsverhältnisse) in verschiedenen Gewichtsverhältnissen wurde getestet.
Angegeben sind in

Tabelle 18:    Die MHK-Werte und Synergieindices für verschiedene Bakterien bei einem Gewichtsverhältnis MIT zu DGH von 9:1
Tabelle 19:    Die MHK-Werte und Synergieindices für *Escherichia coli*
Tabelle 20:    Die MHK-Werte und Synergieindices für verschiedene Pilze
Tabelle 21:    Die Synergieindices berechnet für die Ergebnisse gemäß Tabelle 20
Tabelle 22:    Die MHK-Werte und Synergieindices für *Alternaria alternata* bei verschiedenen Gewichtsverhältnissen MIT zu DGH
Tabelle 23:    Die MHK-Werte und Synergieindices für *Stachybotrys chartarum* bei verschiedenen Gewichtsverhältnissen MIT zu DGH

Tabelle 18:

| Stamm | MIT | 9 : 1 | DGH | SI |
|---|---|---|---|---|
| *Bacillus subtilis* | 25 | 10 | 2.5 | 0,76 |
| *Salmonella enterica* | 17.5 | 10 | 10 | 0,61 |
| *Staphylococcus aureus* | 50 | 5 | 1 | 0,59 |

Tabelle 19

|  | MIT | 3 : 2 | 1 : 4 | 1 : 9 | DGH |
|---|---|---|---|---|---|
| MHK [ppm] | 25 | 7.5 | 5 | 2.5 | 5 |
| SI |  | 0.78 | 0.84 | 0.46 |  |

Tabelle 20

| Stamm | MIT | 9 : 1 | 4 : 1 | 3 : 2 | 1 : 4 | DGH |
|---|---|---|---|---|---|---|
| *Aspergillus brasiliensis* | 1000 | 175 | 62.5 | 50 | * | 25 |
| *Candida albicans* | 250 | 50 | 50 | 25 | 25 | 25 |
| *Chaetomium globosum* | 500 | 62.5 | 50 | 50 | 25 | 25 |
| *Fusarium solani* | 250 | 50 | 50 | 25 | 25 | 25 |
| *Rhodotorula mucilaginosa* | 250 | 50 | 25 | 25 | 25 | 25 |
| *Trichoderma virens* | 750 | 62.5 | 62.5 | 37.5 | 25 | 25 |
| *nicht bestimmt |  |  |  |  |  |  |

Tabelle 21

| Stamm | 9 : 1 | 4 : 1 | 3 : 2 | 1 : 4 |
|---|---|---|---|---|
| *Aspergillus brasiliensis* | 0.86 | 0.55 | 0.83 | * |
| *Candida albicans* | 0.38 | 0.56 | 0.46 | 0.82 |
| *Chaetomium globosum* | 0.36 | 0.48 | 0.86 | 0.81 |
| *Fusarium solani* | 0.38 | 0.56 | 0.46 | 0.82 |
| *Rhodotorula mucilaginosa* | 0.38 | 0.28 | 0.46 | 0.82 |
| *Trichoderma virens* | 0.33 | 0.57 | 0.63 | 0.81 |
| *nicht bestimmt | | | | |

Tabelle 22

| | MIT | 9 : 1 | 4 : 1 | 3 : 2 | 2 : 3 | 1 : 4 | 1 : 9 | DGH |
|---|---|---|---|---|---|---|---|---|
| MHK [ppm] | 100 | 25 | 25 | 5 | 10 | 10 | 5 | 10 |
| SI | | 0.48 | 0.70 | 0.23 | 0.64 | 0.82 | 0.46 | |

Tabelle 23

| | MIT | 9 : 1 | 4 : 1 | DGH |
|---|---|---|---|---|
| MHK [ppm] | 250 | 50 | 25 | 10 |
| SI | | 0.68 | 0.58 | |

Die obigen Tabellen 18-23 zeigen deutlich, dass für erfindungsgemäße Zweiermischungen aus MIT und DGH in verschiedenen Mischungsverhältnissen ein ausgeprägter Synergismus gegen verschiedene Bakterien und Pilze vorhanden ist.

**Beispiel 5: Mikrobiologischer Belastungstest**

Mit einem mikrobiologischen Belastungstest wurde die Anfälligkeit wasserbasierter Systeme gegen mikrobiellen Befall und die Wirkung von Konservierungsmitteln überprüft. Hierzu wurden die Konservierungsmittel in definierten Konzentrationen in die wasserbasierten Systeme eingearbeitet. Zur Simulierung praxisnaher Bedingungen wurden die Proben nach Einarbeitung der jeweiligen Biozidprodukte in den angegebenen Konzentrationen für 3 Tage bei 60 °C einer thermischen Belastung ausgesetzt, um labile Wirkstoffbestandteile in den Biozidprodukten bereits in dieser Phase des Versuchs durch anschließende Unwirksamkeit zu identifizieren. Danach erfolgte über einen Versuchszeitraum von 6 Wochen eine Kontamination mit Mikroorganismen wie unten angegeben im wöchentlichen Abstand, so dass nach jeder Kontamination ca. $10^6$ - $10^7$ Bakterien pro/g enthalten sind. 3 und 7 Tage nach jeder Kontamination wurde durch Keimzahlbestimmung festgestellt, ob vollständige Abtötung (= 0 Bakterien pro/g) oder zumindest Vermehrungshemmung (auf $10^5$ - $10^1$ Bakterien pro/g) der eingebrachten Mikroorganismen im Vergleich zu den nicht konservierten Kontrollproben eingetreten ist.

Als wasserbasiertes System wurde eine Aufschlämmung von Calciumcarbonat (Calciumcarbonatslurry) mit einem Feststoffanteil von 75 Gew.-% durchgeführt. Als Mikroorganismen wurden für den Versuch folgende Bakterienarten in Mischung eingesetzt:

Pseudomonas aeruginosa, Pseudomonas fluorescens, Pseudomonas oleovorans, Pseudomonas rubescens, Pseudomonas stutzeri, Alcaligenes faecalis, Citrobacter freundii, Corynebacterium sp..

Eine sehr gute Wirksamkeit wird erreicht, wenn die konservierten Proben eine vollständige Abtötung (= 0 Bakterien pro/g) der eingebrachten Mikroorganismen bewirken (3= sehr gut). Eine gute Wirkung liegt dann vor, wenn im Vergleich zur unkonservierten Probe ein stark reduziertes Mikrobenniveau beobachtet wird (auf $10^3$ - $10^1$ Bakterien pro/g)

Eine mäßige Wirkung liegt dann vor, wenn im Vergleich zur unkonservierten Probe ein leicht reduziertes Mi-

krobenniveau beobachtet wird.( auf $10^4$ - $10^3$ Bakterien pro/g). Eine mangelhafte Wirkung liegt dann vor, wenn im Vergleich zur unkonservierten Probe keine oder eine nur geringfügige Reduktion des Mikrobenniveaus beobachtet wird (auf $10^7$ - $10^5$ Bakterien pro/g).

Die erzielten Ergebnisse sind in Tabelle 24 angegeben.

Tabelle 24

| Dosierung der Biozidgemische | Woche 1 | Woche 2 | Woche 3 | Woche 4 | Woche 5 | Woche 6 |
|---|---|---|---|---|---|---|
| BIT / MIT (je 2,5%) | | | | | | |
| 500 ppm | 2 | 1 | 1 | 1 | 0 | 0 |
| 750 ppm | 3 | 2 | 1 | 1 | 0 | 0 |
| 1000 ppm | 3 | 3 | 2 | 1 | 0 | 0 |
| 500 ppm + 100 ppm DGH | 3 | 3 | 3 | 3 | 2 | 2 |
| 500 ppm: Zugabe von 0,05 % eines flüssigen Gemischs von BIT (2,5%) und MIT (2,5%) zur fertigen Calciumcarbonatslurry | | | | | | |

**Beurteilung der Konservierung**

0 = mangelhaft ($10^7$ - $10^5$ Bakterien pro/g)
1 = mäßig ($10^4$ - 103 Bakterien pro/g)
2 = gut ($10^3$ - $10^1$ Bakterien pro/g)
3 = sehr gut (0 Bakterien pro/g)

Wie obiger Tabelle zu entnehmen ist, kann durch Zugabe von DGH die Wirkung von aus dem Stand der Technik bekannten Mischungen von BIT und MIT verstärkt werden und es resultieren antimikrobiell, insbesondere antibakteriell widerstandsfähigere Suspensionen, Dispersionen oder Aufschlämmungen von Mineralien, Füllstoffen oder Pigmenten.

**Patentansprüche**

**1.** Biozide Mittel, enthaltend

(a)

(i) 1,2- Benzisothiazolin-3-on,
oder
(ii) 1,2-Benzisothiazolin-3-on und 2-Methyl-4-isothiazolin-3-on,

und
(b) zumindest ein N-Alkyl-Guanidiniumsalz der Formel (I),

$$[H_2N\text{-}(C\text{=}NH_2)\text{-}NH\text{-}R]^+X^- \qquad (I)$$

in der R für n-Dodecyl und $X^-$ für ein monovalentes Anion oder 1/p Äquivalente eines p-valenten Anions steht, wobei p für eine natürliche Zahl von 2 oder mehr steht.

**2.** Biozide Mittel nach Anspruch 1, **dadurch gekennzeichnet dass** sie 1,2-Benzisothiazolin-3-on und 2-Methyl-4-isothiazolin-3-on enthalten.

**3.** Biozide Mittel nach einem der Ansprüche 1 oder 2, **dadurch gekennzeichnet, dass** das Gewichtserhältnis der Komponenten (a) und (b) zueinander 10:1 bis 1:10 vorzugsweise 5:1 bis 1:5 und besonders bevorzugt 2:1 bis 1:5 beträgt.

**4.** Biozide Mittel nach einem der Ansprüche 2 oder 3, **dadurch gekennzeichnet, dass** das Gewichtserhältnis von BIT und MIT 1:100 bis 100:1, vorzugsweise 3:1 bis 1:3 und besonders bevorzugt 1,5:1 bis 1:2,5 beträgt.

**5.** Biozide Mittel nach einem der Ansprüche 1 bis 4, **dadurch gekennzeichnet, dass** die Summe aus den Komponenten (a) und (b) 1 bis 80 Gew.%, bevorzugt 2 bis 70 Gew.% und besonders bevorzugt 4 bis 50 Gew.% bezogen auf das Gesamtgewicht des bioziden Mittels beträgt.

**6.** Biozide Mittel nach einem der Ansprüche 1 bis 5, **dadurch gekennzeichnet, dass** sie als Komponente c) zusätzlich entweder keinen, einen oder mehrere weitere biozide Wirkstoffe enthalten, die vorzugsweise ausgewählt sind aus der Gruppe bestehend aus Bronopol, Benzylhemiformal, Trimethylen-2-methylisothiazolinon-3-on, N-Methyl-benzisothiazolinon, 2-n-Octylisothiazolin-3-on, Tetramethylolacetylendiharnstoff (TMAD), 1,3-Bis(hydroxymethyl)-5,5-dimethylimidazolidine-2,4-dion (DMDMH), p-Chlor-m-kresol, Dimethylolharnstoff, 1,2-Dibrom-2,4-dicyano-butan, 2,2-Dibrom-3-nitrilopropionsäureamid, Glutardialdehyd, Ethylenglykolhemiformal, Ethylenglykol-bis-hemiformal, N-Methylol-harnstoff, Thiabendazol, Carbendazim, Zink-Pyrithion, Natrium-Pyrithion, 2- Phenoxyethanol, Phenoxypropanol, o-Phenyl-phenol, Chlorophen und quartären Ammoniumsalzen, wie z. B. N-Alkyl-N,N-dimethyl-benzyl-ammoniumchlorid sowie 5-Chlor-2-methyl-4-isothia-zolinon (CMIT).

**7.** Biozide Mittel nach Anspruch 6, **dadurch gekennzeichnet, dass** sie 0,2 und 20 Gew-%, bevorzugt zwischen 0,5 und 10 Gew-% und besonders bevorzugt zwischen 0,5 und 5 Gew-% der Komponente c) bezogen auf das Gesamtgewicht des bioziden Mittels enthalten.

**8.** Biozide Mittel nach einem der Ansprüche 1 bis 7, **dadurch gekennzeichnet, dass** sie in Form von Lösungen, Emulsionen, Suspensionen, Pulvern, Schäumen, Pasten, Granulaten, Aerosolen und Mikroverkapselungen in polymeren Stoffen vorliegen.

**9.** Biozide Mittel nach einem der Ansprüche 1 bis 8, **dadurch gekennzeichnet, dass** sie jeweils unabhängig voneinander weiterhin enthalten oder jeweils nicht: Grenzflächenaktive Stoffe, Benetzungsmittel, Emulgatoren, Dispergiermittel, Stabilisatoren, Haftmittel und Verdicker, Spreitmittel, Organische Lösungsmittel, Duftstoffe und Farbstoffe, Puffersubstanzen, Puffersysteme oder pH-Wert-Regulatoren, Feste Trägerstoffe, Wasser.

**10.** Technische Materialien enthaltend ein biozides Mittel nach einem der Ansprüche 1 bis 9.

**11.** Technische Materialien nach Anspruch 10, **dadurch gekennzeichnet, dass** es sich um folgende handelt:

- Beschichtungsmittel, wie Anstrichmittel, Farben, Putze
- Stärkelösungen und -slurrys oder andere auf Basis von Stärke hergestellte Produkte wie z.B. Druckverdicker
- Slurrys anderer Rohstoffe wie Farbpigmente (z.B. Eisenoxidpigmente, Rußpigmente, Titandioxidpigmente) oder Slurrys von anorganischen Füllstoffen und Pigmenten wie Kaolin, Calciumcarbonat, Gips, Bentonit, Magnesium Silikate, Smectid oder Talkum.
- Bauchemische Produkte wie Betonaddtive beispielsweise auf Basis von Melasse, Ligninsulfonat oder Polyacrylaten, Bituimenemulsionen oder Fugendichtungsmassen
- Leime oder Klebstoffe auf Basis der bekannten tierischen, pflanzlichen oder synthetischen Rohstoffe
- Polymerdispersionen auf Basis von z.B. Polyacrylat, Polystyrolacrylat, Styrolbutadien, Polyvinylacetat u.a.
- Detergentien und Reinigungsmittel für den technischen und Haushaltsbedarf
- Mineralöle und Mineralölprodukte wie z.B. Dieselkraftstoffe
- Kühlschmierstoffe zur Metallverarbeitung auf Basis von Mineralöl-haltigen, halbsynthetischen oder synthetischen Konzentraten
- Hilfsmittel für die Leder-, Textil- oder photochemische Industrie
- Vor- und Zwischenprodukte der chemischen Industrie, z.B. bei der Farbstoffproduktion und -lagerung
- Tinten oder Tuschen
- Wachs und Tonemulsionen

**12.** Verfahren zum Schutz technischer Materialien vor Befall mit und/oder Zerstörung durch oder Bekämpfung von Mikroorganismen, **dadurch gekennzeichnet, dass** das technische Material mit zumindest einem bioziden Mittel nach einem der Ansprüche 1 bis 9 in Kontakt gebracht wird.

**13.** Verwendung von 1,2-Benzisothiazolin-3-on oder 2-Methyl-4-isothiazolin-3-on oder N-Alkyl-Guanidiniumsalzen zur Herstellung der bioziden Mittel nach einem der Ansprüche 1 bis 9 oder der technischen Materialien nach Anspruch 10 oder 11.

**Claims**

1.  Biocidal substances comprising

    (a)

        (i) 1, 2-benzisothiazolin-3-one, or
        (ii) 1,2-benzisothiazolin-3-one and 2-methyl-4-isothiazolin-3-one,

    and
    (b) at least one N-alkyl-guanidinium salt of the formula (I),

    $$[H_2N-(C=NH_2)-NH-R]^+X^- \qquad (I)$$

    in which R is n-dodecyl and $X^-$ is a monovalent anion or 1/p equivalents of a p-valent anion, where p is a natural number of 2 or more.

2.  Biocidal substances according to Claim 1, **characterized in that** they comprise 1,2-benzisothiazolin-3-one and 2-methyl-4-isothiazolin-3-one.

3.  Biocidal substances according to either one of Claims 1 and 2, **characterized in that** the weight ratio of components (a) and (b) to one another is 10:1 to 1:10, preferably 5:1 to 1:5 and particularly preferably 2:1 to 1:5.

4.  Biocidal substances according to either one of Claims 2 and 3, **characterized in that** the weight ratio of BIT and MIT is 1:100 to 100:1, preferably 3:1 to 1:3 and particularly preferably 1.5:1 to 1:2.5.

5.  Biocidal substances according to any one of Claims 1 to 4, **characterized in that** the sum of components (a) and (b) is 1 to 80% by weight, preferably 2 to 70% by weight and particularly preferably 4 to 50% by weight, based on the total weight of the biocidal substance.

6.  Biocidal substances according to any one of Claims 1 to 5, **characterized in that** they comprise, as component c), additionally either no, one or more further biocidal active ingredients which are preferably selected from the group consisting of bronopol, +benzylhemiformal, trimethylene-2-methylisothiazolinon-3-one, N-methylbenzisothiazolinone, 2-n-octylisothiazolin-3-one, tetramethylolacetylenediurea (TMAD), 1,3-bis(hydroxymethyl)-5,5-dimethylimidazolidine-2,4-dione (DMDMH), p-chloro-m-cresol, dimethylolurea, 1,2-dibromo-2,4-dicyanobutane, 2,2-dibromo-3-nitrilopropionamide, glutardialdehyde, ethylene glycol hemiformal, ethylene glycol bis-hemiformal, N-methylolurea, thiabendazole, carbendazim, zinc pyrithione, sodium pyrithione, 2-phenoxyethanol, phenoxypropanol, o-phenylphenol, chlorophene and quarternary ammonium salts, such as e.g. N-alkyl-N,N-dimethylbenzylammonium chloride, and 5-chloro-2-methyl-4-isothiazolinone (CMIT).

7.  Biocidal substances according to Claim 6, **characterized in that** they comprise 0.2 and 20% by weight, preferably between 0.5 and 10% by weight and particularly preferably between 0.5 and 5% by weight of component c), based on the total weight of the biocidal substance.

8.  Biocidal substances according to any one of Claims 1 to 7, **characterized in that** they are present in the form of solutions, emulsions, suspensions, powders, foams, pastes, granules, aerosols and microencapsulations in polymeric substances.

9.  Biocidal substances according to any one of Claims 1 to 8, **characterized in that**, in each case independently, they further comprise or in each case do not comprise: interface-active substances, wetting agents, emulsifiers, dispersants, stabilizers, adhesives and thickeners, spreading agents, organic solvents, fragrances and dyes, buffer substances, buffer systems or pH regulators, solid carriers, water.

10. Technical materials containing a biocidal substance according to any one of Claims 1 to 9.

**11.** Technical materials according to Claim 10, **characterized in that** they are one of the following:

- a coating, such as paint, ink, plaster
- a starch solution or slurry or other product produced on the basis of starch such as e.g. printing thickener
- a slurry of other raw materials such as colored pigments (e.g. iron oxide pigments, carbon black pigments, titanium dioxide pigments) or a slurry of inorganic fillers and pigments such as kaolin, calcium carbonate, gypsum, bentonite, magnesium silicate, smectite or talc
- a construction chemical product such as a concrete additive, for example based on molasses, lignosulfonate or polyacrylates, a bitumen emulsion or a joint sealant
- a glue or adhesive based on known animal, vegetable or synthetic raw materials
- a polymer dispersion based on e.g. polyacrylate, polystyrene acrylate, styrene butadiene, polyvinyl acetate, etc.
- a detergent or cleaner for industrial and domestic use
- a mineral oil or mineral oil product such as e.g. diesel fuel
- a cooling lubricant for metal working based on mineral oil-containing, semisynthetic or synthetic concentrates
- an auxiliary for the leather, textile or photochemical industry
- a pre-product or intermediate of the chemical industry, e.g. during dye production and storage
- an ink or wash
- a wax or clay emulsion.

**12.** Method for protecting technical materials against infestation with and/or destruction by or controlling of microorganisms, **characterized in that** the technical material is brought into contact with at least one biocidal substance according to any one of Claims 1 to 9.

**13.** Use of 1,2-benzisothiazolin-3-one or 2-methyl-4-isothiazolin-3-one or N-alkyl-guanidinium salts for producing the biocidal substances according to any one of Claims 1 to 9 or the technical materials according to Claim 10 or 11.

**Revendications**

**1.** Agents biocides, contenant :

(a)

(i) de la 1,2-benzisothiazolin-3-one
ou
(ii) de la 1,2-benzisothiazolin-3-one et de la 2-méthyl-4-isothiazolin-3-one,

et
(b) au moins un sel de N-alkyl-guanidinium de formule (I)

$$[H_2N\text{-}(C=NH_2)\text{-}NH\text{-}R]^+ \ X^- \qquad (I)$$

dans laquelle R représente n-dodécyle et $X^-$ représente un anion monovalent ou 1/p équivalents d'un anion p-valent, p représentant un nombre naturel valant 2 ou plus.

**2.** Agents biocides selon la revendication 1, **caractérisés en ce qu'**ils contiennent de la 1,2-benzisothiazolin-3-one et de la 2-méthyl-4-isothiazolin-3-one.

**3.** Agents biocides selon l'une quelconque des revendications 1 ou 2, **caractérisés en ce que** le rapport en poids des composants (a) et (b) l'un par rapport à l'autre est de 10:1 à 1:10, de préférence de 5:1 à 1:5 et de manière particulièrement préférée de 2:1 à 1:5.

**4.** Agents biocides selon l'une quelconque des revendications 2 ou 3, **caractérisés en ce que** le rapport en poids entre BIT et MIT est de 1:100 à 100:1, de préférence de 3:1 à 1:3, et de manière particulièrement préférée de 1,5:1 à 1:2,5.

**5.** Agents biocides selon l'une quelconque des revendications 1 à 4, **caractérisés en ce que** la somme des composants (a) et (b) est de 1 à 80 % en poids, de préférence de 2 à 70 % en poids et de manière particulièrement préférée de 4 à 50 % en poids, par rapport au poids total de l'agent biocide.

6. Agents biocides selon l'une quelconque des revendications 1 à 5, **caractérisés en ce qu'**ils contiennent en outre en tant que composant c) aucun, un ou plusieurs agents actifs biocides supplémentaires, qui sont de préférence choisis dans le groupe constitué par le bronopol, le benzylhémiformal, la triméthylène-2-méthylisothiazolinon-3-one, la N-méthyl-benzisothiazolinone, la 2-n-octylisothiazolin-3-one, la tétraméthylolacétylène-diurée (TMAD), la 1,3-bis(hydroxyméthyl)-5,5-diméthylimidazolidine-2,4-dione (DMDMH), le p-chloro-m-crésol, la diméthylol-urée, le 1,2-dibromo-2,4-dicyano-butane, l'amide de l'acide 2,2-dibromo-3-nitrilopropionique, le glutardialdéhyde, l'hémiformal d'éthylène glycol, le bis-hémiformal d'éthylène glycol, la N-méthylol-urée, le thiabendazole, le carbendazime, la pyrithione de zinc, la pyrithione de sodium, le 2-phénoxyéthanol, le phénoxypropanol, l'o-phényl-phénol, le chlorophène et les sels d'ammonium quaternaires, tels que p. ex. le chlorure de N-alkyl-N,N-diméthyl-benzyl-ammonium, ainsi que la 5-chloro-2-méthyl-4-isothiazolinone (CMIT).

7. Agents biocides selon la revendication 6, **caractérisés en ce qu'**ils contiennent entre 0,2 et 20 % en poids, de préférence entre 0,5 et 10 % en poids et de manière particulièrement préférée entre 0,5 et 5 % en poids du composant c), par rapport au poids total de l'agent biocide.

8. Agents biocides selon l'une quelconque des revendications 1 à 7, **caractérisés en ce qu'**ils se présentent sous la forme de solutions, d'émulsions, de suspensions, de poudres, de mousses, de pâtes, de granulats, d'aérosols et de micro-encapsulations dans des matières polymères.

9. Agents biocides selon l'une quelconque des revendications 1 à 8, **caractérisés en ce qu'**ils contiennent respectivement en outre indépendamment les uns des autres ou ne contiennent pas : des substances tensioactives, des agents mouillants, des émulsifiants, des dispersants, des stabilisateurs, des agents adhérents et des épaississants, des agents d'étalement, des solvants organiques, des parfums et des colorants, des substances tampons, des systèmes tampons ou des régulateurs de pH, des véhicules solides, de l'eau.

10. Matériaux techniques contenant un agent biocide selon l'une quelconque des revendications 1 à 9.

11. Matériaux techniques selon la revendication 10, **caractérisés en ce qu'**il s'agit des suivantes :

    - des agents de revêtement, tels que des peintures, des colorants, des enduits,
    - des solutions et des suspensions d'amidon ou d'autres produits fabriqués à base d'amidon, tels que p. ex. des épaississants d'impression,
    - des suspensions d'autres matières premières telles que des pigments colorés (p. ex. des pigments d'oxyde de fer, des pigments de noir de carbone, des pigments de dioxyde de titane), ou des suspensions de charges inorganiques et de pigments tels que le kaolin, le carbonate de calcium, le plâtre, la bentonite, le silicate de magnésium, la smectite ou le talc,
    - des produits chimiques de construction tels que des additifs pour béton, par exemple à base de mélasse, de sulfonate de lignine ou de polyacrylates, des émulsions de bitume ou des matériaux d'étanchéité de joints,
    - des colles ou des adhésifs à base de matières premières animales, végétales ou synthétiques connues,
    - des dispersions de polymères à base p. ex. de polyacrylate, de polyacrylate de styrène, de styrène-butadiène, de polyacétate de vinyle, entre autres,
    - des détergents et des agents nettoyants pour les besoins techniques et ménagers,
    - des huiles minérales et des produits à base d'huiles minérales tels que p. ex. des carburants diesel,
    - des lubrifiants réfrigérants pour l'usinage des métaux à base de concentrés contenant des huiles minérales, semi-synthétiques ou synthétiques,
    - des adjuvants pour l'industrie du cuir, textile et photochimique,
    - des produits préliminaires et intermédiaired de l'industrie chimique, p. ex. lors de la production et du stockage de colorants,
    - des encres ou des encres de Chine,
    - des cires et des émulsions d'argile.

12. Procédé de protection de matériaux techniques d'une infestation avec et/ou d'une destruction par ou de lutte contre des microorganismes, **caractérisé en ce que** le matériau technique est mis en contact avec au moins un agent biocide selon l'une quelconque des revendications 1 à 9.

13. Utilisation de 1,2-benzisothiazolin-3-one ou de 2-méthyl-4-isothiazolin-3-one ou de sels de N-alkyl-guanidinium pour la fabrication des agents biocides selon l'une quelconque des revendications 1 à 9 ou des matériaux techniques selon la revendication 10 ou 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4661503 A

- EP 1005271 A1

**In der Beschreibung aufgeführte Nicht-Patentliteratur**

- **F.C. KULL et al.** *Applied Microbiology,* 1961, vol. 9, 538-541